# EUROPÄISCHE PATENTSCHRIFT

(11) **EP 2 118 979 B1**
(45) Veröffentlichungstag und Bekanntmachung des Hinweises auf die Patenterteilung: **29.06.2011**
(21) Anmeldenummer: 08708746.6
(22) Anmeldetag: 06.02.2008
(51) Int. Cl.: H02G 5/10

(54) **ELEKTROENERGIEÜBERTRAGUNGSANORDNUNG MIT EINEM KAPSELUNGSGEHÄUSE**
ELECTRIC ENERGY TRANSFER DEVICE COMPRISING AN ENCLOSED HOUSING
DISPOSITIF DE TRANSMISSION D'ENERGIE ELECTRIQUE COMPORTANT UN BOITIER D'ENCAPSULAGE

(30) Priorität: 16.02.2007 DE 102007008591
(43) Veröffentlichungstag der Anmeldung: 18.11.2009
(73) Patentinhaber: Siemens Aktiengesellschaft, 80333 München (DE)
(72) Erfinder: GÖSCHEL, Sebastian, 14621 Schönwalde (DE); MEINHERZ, Manfred, 13467 Berlin (DE)
(86) Internationale Anmeldenummer: PCT/EP2008/051455
(87) Internationale Veröffentlichungsnummer: WO 2008/098866

(56) Entgegenhaltungen:
- EP-A- 0 538 471
- EP-A- 0 773 617
- EP-A- 1 022 830
- EP-A- 1 507 323
- DE-A1- 2 707 206
- DE-A1- 10 119 095
- GB-A- 2 085 238

## Beschreibung

Die Erfindung bezieht sich auf eine Elektroenergieübertragungsanordnung mit einem Kapselungsgehäuse und einem im Innern des Kapselungsgehäuses angeordneten Aktivelement, wobei eine Strömungslenkeinrichtung einen Fluidstrom auf einen äußeren Abschnitt des Kapselungsgehäuses lenkt und zwischen der Strömungslenkeinrichtung und dem äußeren Abschnitt zumindest ein Kanal mit einer Fluideintrittsöffnung und einer Fluidaustrittsöffnung geformt ist.

Eine Elektroenergieübertragungsanordnung ist beispielsweise aus der Offenlegungsschrift WO 00/45486 bekannt. Dort ist eine mehrphasig gekapselte Freiluft-Hochspannungs-schalteinrichtung beschrieben. Diese Elektroenergieübertragungsanordnung ist aus einer Vielzahl von einzelnen Modulen aufgebaut. Jedes der Module weist ein Kapselungsgehäuse auf. Im Inneren der Kapselungsgehäuse sind verschiedene Aktivelemente angeordnet. Je nach Ausgestaltung der Aktivelemente kommt es im Innern der Kapselungsgehäuse bewirkt durch Stromwärmeeffekte zur Abgabe von thermischer Energie. Bei einer Dimensionierung von derartigen Elektroenergieübertragungsanordnungen ist diese Erwärmung zu berücksichtigen. Kritische Temperaturen treten während eines regulären Betriebes selten auf. Elektroenergieübertragungsanordnungen sind auf diese kritischen Temperaturen auszulegen. Um dieser Belastung sicher stand zu halten, sind entsprechend großvolumige Elektroenergieübertragungsanordnungen im Einsatz.

Aus der europäischen Patentanmeldung EP 1 507 323 A1 ist ein Schaltgerät mit Wärme abführenden Elementen bekannt. Innenleiter eines Schaltgerätes mit kreisförmigem Querschnitt sind von kastenartigen Gehäusen umgeben, wobei Wandungen des Gehäuses teilweise doppelwandig ausgeführt sind. Innerhalb des doppelwandigen Bereiches ist eine Führung einer Luftströmung vorgesehen.

Weiterhin ist aus der Offenlegungsschrift DE 101 19 095 A1 bekannt, Wände sowie eine Tür eines Schaltschrankes mehrschalig auszubilden, wobei im Innern der Tür bzw. der Wandungen entsprechende vertikale Strömungskanäle vorgesehen sind, um eine integrierte Wärmeableitung zu ermöglichen.

Aus der Offenlegungsschrift DE 27 07 206 A1 geht ein druckgasisolierter Hochspannungsschalter hervor, welcher innerhalb eines geschlossenen Mantels angeordnet ist. An dem Mantel sind Rohrstutzen angeordnet, über welche ein Wärmetransportmedium in den Mantel eingeblasen bzw. aus dem Mantel herausgeleitet werden kann. Um eine Strömung innerhalb des Mantels zu erzeugen, sind mechanisierte Umwälzeinrichtungen vorgesehen. Derartige Umwälzeinrichtungen erfordern die Aufwendung von zusätzlicher Hilfsenergie, um eine Strömung um das Gehäuse des dortigen druckgasisolierten Hochspannungsschalters hervorzurufen.

Je nach Leistung der Umwälzeinrichtungen wird eine mehr oder weniger starke Durchströmung des Mantels erzeugt. Mit zunehmender Leistung wird der zum Betrieb der Umwälzeinrichtungen benötigte Energiebedarf erhöht. Durch den zusätzlichen Energiebedarf wird die Gesamtenergiebilanz des bekannten Hochspannungsschalters negativ beeinflusst.

Daher ergibt sich als Aufgabe der Erfindung eine Elektroenergieübertragungsanordnung anzugeben, welche Kostengünstig von einem Fluidstrom umströmt werden kann.

Erfindungsgemäß wird dies bei einer Elektroenergieübertragungsanordnung der eingangs genannten Art dadurch gelöst, dass das Kapselungsgehäuse einen Abschnitt mit einer annähernd walzenförmigen Außenkontur aufweist und der Kanal im Bereich der walzenförmigen Außenkontur zumindest teilweise durch eine im Wesentlichen rinnenförmige Strömungslenkeinrichtung begrenzt ist, die ein erstes und ein zweites Teilelement aufweist, deren Enden in den Bereichen der Fluideintrittsöffnung und der Fluidaustrittsöffnung leicht nach außen gebogen sind, so dass Abschnitte von parallel zueinander liegenden Flächen der beiden Teilelemente die Fluideintrittsöffnung und die Fluidaustrittsöffnung beabstandet von der Oberfläche des Kapselungsgehäuses halten.

Strömungslenkeinrichtungen gestatten es, bestimmte äußere Abschnitte des Kapselungsgehäuses gezielt mit einem Fluidstrom zu beaufschlagen. Dadurch wird eine Wärmeableitung aus dem Inneren des Kapselungsgehäuses in die Umgebung des Kapselungsgehäuses unterstützt. Somit besteht die Möglichkeit, beispielsweise in Spitzenbelastungszeiten über den Fluidstrom Wärme gezielt aus einem Bereich der Elektroenergieübertragungsanordnung herauszuführen. Dazu kann es beispielsweise auch vorgesehen sein, dass eine Zwangsströmung des Fluidstromes, beispielsweise durch Ventilatoren, Pumpen usw., erzeugt wird. Als geeignetes Fluid ist beispielsweise atmosphärisches Gas einsetzbar. Derartiges Gas steht in großen Mengen zur Verfügung und kann leicht aktiviert werden. Es eignen sich jedoch auch flüssige Medien als Fluid. Diese haben den Vorteil, dass eine größere Wärmemenge aufgenommen und transportiert werden kann. Als Flüssigkeiten sind dabei insbesondere Öle und ähnliche Stoffe einsetzbar.

Es kann auch vorgesehen sein, dass die Strömungslenkeinrichtung nach Art eines Flügelelementes eine natürliche Strömung der Atmosphäre aufnimmt und in Richtung eines äußeren Abschnittes des Kapselungsgehäuses lenkt. Dies hat den Vorteil, dass eine Kühlung der Oberfläche des Kapselungsgehäuses unabhängig von Hilfseinrichtungen gewährleistet ist. Weiter können robuste Strömungslenkeinrichtungen eingesetzt werden, welche über Jahre hinaus wartungsfrei eine Kühlung unterstützen.

Eine weitere vorteilhafte Ausgestaltung kann vorsehen, dass die Strömungslenkeinrichtung das Kapselungsgehäuse zumindest teilweise abschattet.

Elektroenergieübertragungsanordnungen werden regelmäßig auch unter Freiluftbedingungen aufgestellt, d. h. die Elektroenergieübertragungsanordnungen sind den Witterungsverhältnissen unmittelbar ausgesetzt. Insbesondere Sonneneinstrahlung kann zu einem zusätzlichen Erwärmen von Kapselungsgehäusen führen. Dadurch wird zusätzlich zu einer von Stromwärmeeffekten hervorgerufenen Wärme von außen Wärme in das Innere der Kapselungsgehäuse eingetragen. Somit kann die Belastbarkeit der Elektroenergieübertragungsanordnung durch äußere Einflüsse begrenzt sein.

Durch eine entsprechende Ausgestaltung der Strömungslenkeinrichtung, die zum einen eine Fluidströmung beeinflusst und zum anderen eine Abschattung eines Kapselungsgehäuses bewirkt, kann die kühlende Wirkung des Fluidstromes zusätzlich unterstützt werden. Durch die Abschattung wird eine Erwärmung des Kapselungsgehäuses bzw. des Inneren des Kapselungsgehäuses durch einstrahlende Sonnenwärme vermindert. Weiterhin kann die Strömungslenkeinrichtung einen entsprechenden Fluidstrom lenken und so Wärme von der Oberfläche des Kapselungsgehäuses fortführen.

Eine weitere vorteilhafte Ausgestaltung kann vorsehen, dass die Strömungslenkeinrichtung zumindest teilweise an dem Kapselungsgehäuse abgestützt ist.

Eine Abstützung der Strömungslenkeinrichtung an dem Kapselungsgehäuse ermöglicht es, die Strömungslenkeinrichtung bereits während einer fabrikseitigen Vorfertigung an dem Kapselungsgehäuse zu befestigen und diese als bauliche Einheit auszuliefern. Dadurch ist es nicht mehr nötig, dass Vorort auf der Errichtungsstelle zusätzliche Montagearbeiten zu tätigen sind oder Fundamente zum Halten von Strömungslenkeinrichtungen errichtet werden müssen. Die Strömungslenkeinrichtung kann dabei derart ausgestaltet sein, dass diese bei einem modulartigen Aufbau der Elektroenergieübertragungsanordnung, wie beispielsweise aus der WO 00/45486 bekannt, ebenfalls modulweise aufgebaut ist. Dies ermöglicht einen hohen Vorfertigungsgrad in stationären Fertigungsstätten. Die Module können in bekannter Art und Weise einzeln unabhängig voneinander komplettiert werden. So wie die Kapselungsgehäuse einzelner Module Aktivelemente im Innern aufnehmen, können entsprechende Strömungslenkeinrichtungen an den Kapselungsgehäusen an, deren Außenseiten angeordnet werden. So kann beispielsweise vorgesehen sein, dass die Strömungslenkeinrichtung bei einer Herstellung eines Kapselungsgehäuses durch ein Gießverfahren während des Gießvorganges angeformt wird. Die Strömungslenkeinrichtung ist so ein integraler Bestandteil des Kapselungsgehäuses. Es kann auch vorgesehen sein, dass eine Strömungslenkeinrichtung durch entsprechend geeignete Fügeverfahren, wie Schweißen, Schrauben, Nieten, Kleben usw., an dem Kapselungsgehäuse befestigt wird. Zum Befestigen können entsprechende Konstruktionen, wie Bolzen, Stege usw., eingesetzt werden. Mittels der Bolzen, Stege usw. ist es beispielsweise möglich, die Strömungslenkeinrichtung von dem Kapselungsgehäuse beabstandet zu positionieren.

Eine weitere vorteilhafte Ausgestaltung kann vorsehen, dass zwischen der Strömungslenkeinrichtung und dem äußeren Abschnitt zumindest ein Kanal mit einer Fluideintrittsöffnung und einer Fluidaustrittsöffnung geformt ist.

Eine Ausbildung eines Kanals zwischen der Strömungslenkeinrichtung und einem äußeren Abschnitt eines Kapselungsgehäuses gestattet eine effektive Lenkung von großen Fluidvolumina. Dadurch ist es möglich, auch in kleinen Bereichen einen großen Fluiddurchsatz zu ermöglichen. Dadurch kann eine große Wärmemenge von der äußeren Oberfläche des Kapselungsgehäuses abgegeben und in den Fluidstrom eingeleitet werden. Über entsprechend ausgestaltete Fluideintritts- und Fluidaustrittsöffnungen kann zusätzlich ein Lenken des Fluidstromes beeinflusst werden.

Dabei kann vorteilhaft vorgesehen sein, dass die Fluideintrittsöffnung einen größeren Querschnitt aufweist als die Fluidaustrittsöffnung.

Durch die unterschiedliche Gestaltung von Querschnitten der Fluideintritts- und der Fluidaustrittsöffnung ist gewährleistet, dass eine Strömung vorteilhaft von der Fluideintrittsöffnung zu der Fluidaustrittsöffnung erfolgt. Somit kann der Kanal je nach Einbaulage des Kapselungsgehäuses eine Lenkung des Fluidstromes in bestimmte Richtungen vorsehen.

Vorteilhafterweise kann vorgesehen sein, dass sich der Querschnitt des Kanals in Strömungsrichtung reduziert.

Ausgehend von einer Strömungsrichtung von der Fluideintrittsöffnung zu der Fluidaustrittsöffnung wird durch einen geringeren Querschnitt der Fluidaustrittsöffnung und der Fluideintrittsöffnung, bezogen auf die Strömungsrichtung, der Querschnitt des Kanals reduziert. Durch eine entsprechende Formgebung des Kanals kann diese Wirkung unterstützt werden. Dadurch entsteht innerhalb des Kanals eine düsenartige Wirkung, wodurch die Strömungsgeschwindigkeit des Fluids an der Fluidaustrittsöffnung erhöht wird. Dadurch wird ein Wärmeabtransport aus dem Kanal unterstützt.

Eine weitere vorteilhafte Ausgestaltung kann vorsehen, dass der Kanal mehrere parallel wirkende Teilkanäle aufweist. Mehrere parallel wirkende Teilkanäle können beispielsweise durch stegartige Wandungen voneinander getrennt sein. Dadurch ist es möglich, einen Fluidstrom in einer möglichst breiten Zone des Kapselungsgehäuses zu verteilen und strömen zu lassen. Somit wird ein Wärmeübertritt in das Fluid innerhalb eines großen Kontaktbereiches mit dem äußeren Abschnitt des Kapselungsgehäuses ermöglicht. So kann man relativ große Fluidmengen schnell durch den Kanal leiten, wobei eine gleichmäßige Verteilung des strömenden Fluids über ein großes Kanalvolumen ermöglicht ist. Dabei kann vorgesehen sein, dass der Kanal eine gemeinsame Fluideintritts- und gemeinsame Fluidaustrittsöffnung hat, wobei eine Aufteilung des Kanals in mehrere Teilkanäle zwischen der Fluideintrittsöffnung und der Fluidaustrittsöffnung erfolgt.

Vorteilhafterweise kann weiter vorgesehen sein, dass das Kapselungsgehäuse einen Abschnitt mit einer annähernd walzenförmigen Außenkontur aufweist und der Kanal im Bereich der walzenförmigen Außenkontur zumindest teilweise durch eine im Wesentlichen rinnenförmige Strömungslenkeinrichtung begrenzt ist.

Wie aus der WO 00/45486 bekannt, weisen die Kapselungsgehäuse im Regelfall rotationssymmetrische Strukturen auf. Diese rotationssymmetrischen Strukturen führen zu im Wesentlichen walzenförmigen Außenkonturen der einzelnen Kapselungsgehäuse. Dabei kann es vorgesehen sein, dass einzelne Bereiche der walzenförmigen Außenkontur durch Anformungen, wie Flansche oder Anbauten, durchbrochen werden. Jedoch bleibt die Grundform einer Walze an der Außenkontur im Regelfalle erhalten. Durch den Einsatz einer rinnenförmigen Strömungslenkeinrichtung kann die walzenförmige Außenkontur gut ausgenutzt werden und zwischen der rinnenförmigen Struktur der Strömungslenkeinrichtung und der walzenförmigen äußeren Oberfläche ein sich an den äußeren Abschnitt des Kapselungsgehäuses anschmiegender Kanal zur Strömung des Fluids ausgebildet werden. Als rinnenförmige Strömungslenkeinrichtung sind beispielsweise entsprechend geformte Bleche oder Gusskörper einsetzbar, welche die Kontur des jeweiligen Kapselungsgehäuses aufnehmen, so dass in den Abschnitten, in welchen die Strömungslenkeinrichtung angeordnet ist, ein mehrschaliger Aufbau entsteht.

Eine weitere vorteilhafte Ausgestaltung kann vorsehen, dass bezüglich einer Lotrechten die Fluidaustrittsöffnung oberhalb und die Fluideintrittsöffnung unterhalb des Kapselungsgehäuses angeordnet sind.

Bezogen auf eine Lotrechte steigt Wärme in Bereiche oberhalb einer Wärmequelle auf. Davon ausgehend, dass das im Innern des Kapselungsgehäuses angeordnete Aktivelement eine Quelle von Wärmestrahlung ist, kann sich eine Fluidströmung getrieben von Konvektion in dem Kanal einstellen. Dadurch entsteht eine natürliche Strömung innerhalb des Kanals. An der Fluideintrittsöffnung liegt so eine geringere Temperatur des Fluids vor, als an der Fluidaustrittsöffnung. Je nach Leistung der Wärmequelle, d. h. je nach Belastung eines Aktivelementes im Innern des Kapselungsgehäuses mit elektrischem Strom, ist die Konvektion stärker oder weniger stark. Dadurch ist ein selbstregelndes System geschaffen, welches nach Abhängigkeit der Belastung eines Aktivelementes im Innern des Kapselungsgehäuses eine mehr oder weniger starke Kühlung über den Kanal ermöglicht. Weiterhin können über die Befestigungsmittel der Strömungslenkeinrichtung an dem Kapselungsgehäuse Wärmemengen unmittelbar aus dem Kapselungsgehäuse in die Strömungslenkeinrichtung transportiert werden. Dadurch wird eine Wärme abstrahlende Oberfläche am Kapselungsgehäuse der Elektroenergieübertragungsanordnung vergrößert und somit eine verbesserte Wärmeabgabe unterstützt.

Weiterhin kann vorteilhaft vorgesehen sein, dass die Elektroenergieübertragungsanordnung ein elektrisches Schaltgerät aufweist.

Als Elektroenergieübertragungsanordnungen sind verschiedenste Anordnungen vorstellbar, welche ein Kapselungsgehäuse aufweisen und im Innern des Kapselungsgehäuses zumindest ein Aktivelement aufweisen. Insbesondere bei gasdichten Kapselungsgehäusen, die einen unmittelbaren Gasaustausch zwischen dem Inneren des Kapselungsgehäuses und dem Äußeren des Kapselungsgehäuses verhindern, kann der Einsatz von Strömungslenkeinrichtungen eine wirksame Kühlung unterstützen. Als Elektroenergieübertragungsanordnungen mit gasisolierten Kapselungsgehäusen sind beispielsweise Schaltanlagen mit verschiedensten Aktivelementen im Innern der Kapselungsgehäuse bekannt. So können als Aktivelemente Sammelschienenabschnitte, Messwandler, Ein- und Ausleitungen, elektronische Komponenten oder auch elektrische Schaltgeräte, wie beispielsweise Unterbrechereinheiten von Leistungsschaltern, Trennschaltern, Erdungsschaltern, Lasttrennschaltern oder Schnellerdern usw., vorgesehen sein. Insbesondere im Bereich von elektrischen Schaltgeräten kann es aufgrund der im Regelfall durch galvanische Kontaktierung herzustellenden elektrischen Verbindungen zu erhöhten Übergangswiderständen kommen. An diesen Übergangswiderständen treten größere Stromwärmeverluste auf. Insbesondere an diesen Abschnitten eines Kapselungsgehäuses ist es daher vorteilhaft, erfindungsgemäße Strömungslenkeinrichtungen anzuordnen. Es ist jedoch auch vorteilhaft, erfindungsgemäße Strömungslenkeinrichtungen beispielsweise an gasisolierten Rohrleitungen, d. h. an elektrischen Leitern, die in einer Druckgasisolierung innerhalb eines Kapselungsgehäuses angeordnet sind, anzuordnen. Diese elektrischen Leiter dienen beispielsweise dazu, elektrische Energie zu transportieren. Insbesondere bei einer überirdischen Verlegung können die Strömungslenkeinrichtungen in Verbindung mit einer Beschattung des Kapselungsgehäuses eine verbesserte Kühlung bewirken und somit eine zuverlässige Leistungsübertragung sicherstellen.

Im Folgenden wird die Erfindung anhand eines Ausführungsbeispieles schematisch gezeigt und nachfolgend näher beschrieben.

Dabei zeigt die
- Figur 1: eine perspektivische Ansicht eines Kapselungsgehäu- ses mit einem Aktivelement und die
- Figur 2: das aus der Figur 1 bekannte Kapselungsgehäuse in einem Querschnitt.

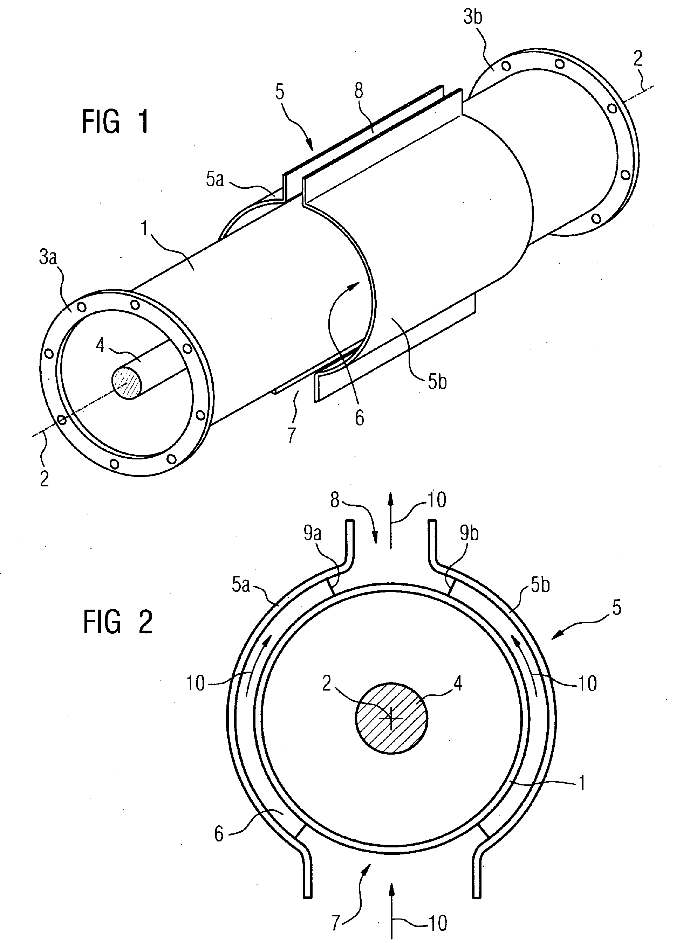

Stellvertretend für eine Vielzahl von möglichen Kapselungsgehäuseformen ist in der Figur 1 ein Abschnitt einer druckgasisolierten Sammelschiene in einer perspektivischen Ansicht dargestellt. Ein Kapselungsgehäuse 1 weist eine im Wesentlichen rohrförmige Struktur auf und ist koaxial zu einer Rotationsachse 2 ausgeformt. An seinen Endseiten ist das Kapselungsgehäuse 1 mit Anschlussflanschen 3a, 3b versehen. Über die Anschlussflansche 3a, 3b ist das Kapselungsgehäuse 1 mit weiteren Kapselungsgehäusen zu verbinden. Die weiteren Kapselungsgehäuse können dabei wie das in der Figur 1 gezeigte Kapselungsgehäuse 1 aussehen. Es können jedoch auch anderweitig gestaltete Kapselungsgehäuse angeflanscht werden.

Im Innern des Kapselungsgehäuses 1 ist koaxial zu der Rotationsachse 2 als Aktivelement ein elektrischer Leiter 4 angeordnet. Der elektrische Leiter 4 ist über entsprechende Isolatoreinrichtungen im Innern des Kapselungsgehäuses 1 isoliert gehalten. Im eingebauten Zustand des Kapselungsgehäuses 1 ist das Innere des Kapselungsgehäuses mit einem elektronegativen Gas, beispielsweise Schwefelhexafluorid oder Stickstoff, befüllt. Das elektronegative Gas weist einen gegenüber der Umgebung des Kapselungsgehäuses 1 erhöhten Druck auf. Dadurch wird die dielektrische Festigkeit im Innern des Kapselungsgehäuses erhöht.

Das Kapselungsgehäuse 1 ist mit einer im Wesentlichen walzenförmigen äußeren Kontur versehen. Im Bereich der walzenförmigen äußeren Kontur ist eine Strömungslenkeinrichtung 5 angeordnet. Die Strömungslenkeinrichtung 5 weist ein erstes und ein zweites rinnenförmiges Teilelement 5a, 5b auf. Die beiden rinnenförmigen Teilelemente 5a, 5b nehmen die Kontur des walzenförmigen äußeren Abschnittes des Kapselungsgehäuses 1 auf und schmiegen sich unter Einhaltung eines Abstandes an einen äußeren Abschnitt des Kapselungsgehäuses 1 an. Dadurch ist zwischen der äußeren Oberfläche des Kapselungsgehäuses 1 und der Strömungslenkeinrichtung 5 ein Kanal 6 gebildet. Durch den Kanal 6 hindurch kann ein Fluid strömen. Zum Eintritt in den Kanal 6 ist eine Fluideintrittsöffnung 7 (vgl. Figur 2) sowie eine Fluidaustrittsöffnung 8 vorgesehen. Die Strömungslenkeinrichtung 5 überspannt einen Abschnitt der Oberfläche des Kapselungsgehäuses 1. Durch eine Anordnung der Strömungslenkeinrichtung 5 unmittelbar über der Oberfläche ist zusätzlich eine Abschattung des Kapselungsgehäuses 1 gegeben.

In der Figur 2 ist ein Bereich des Kapselungsgehäuses 1 im Querschnitt dargestellt. In Figur 2 ist erkennbar, dass der Querschnitt der Fluideintrittsöffnung 7 größer als der Querschnitt der Fluidaustrittsöffnung 8. Dadurch ist ein düsenartiger Charakter des Kanals 6 gebildet, wodurch die im Innern des Kanals 6 geführte Fluidströmung mit einer erhöhten Geschwindigkeit aus dem Kanal 6 austritt. Der Kanal 6 ist aus mehreren Teilkanälen gebildet. Zum einen teilt sich der Kanal 6 in einen durch das erste Teilelement 5a und einen Abschnitt der äußeren Oberfläche des Kapselungsgehäuses 1 begrenzten Teilkanal auf, zum anderen teilt sich der Kanal 6 in einen durch einen Abschnitt der äußeren Oberfläche des Kapselungsgehäuses 1 und das zweite Teilelement 5b gebildeten Teilkanal auf. Im Querschnitt ist zu erkennen, dass die rinnenförmige Ausbildung der Teileelemente 5a, 5b derart gewählt ist, dass Bereiche des Kanals 6 koaxial zu der Rotationsachse 2 ausgerichtet sind. Weiter sind die Teilelemente 5a, 5b über durchgängige Rippen 9a, 9b zu dem Kapselungsgehäuse 1 beabstandet, sowie über diese Rippen 9a, 9b getragen. Dabei sind in Richtung der lotrecht zu der Zeichenebene der Figur 2 verlaufenden Rotationsachse 2 hinter den sichtbaren Rippen 9a, 9b jeweils weitere gleichartige Rippen angeordnet. Dadurch erfolgt eine zusätzliche Teilung der jeweils zwischen den Teilelementen 5a, 5b und dem Kapselungsgehäuse 1 gebildeten Teilkanäle. Somit ist sichergestellt, dass eine Fluidströmung möglichst quer zur Rotationsachse 2 strömt und parallele Strömungen zu der Rotationsachse 2 vermieden sind.

Die Rippen können aus Material gebildet sein, welches gute Wärmeleiteigenschaften aufweist. Somit kann Wärme auch über die dann als Wärmebrücke wirkenden Rippen auf die Strömungslenkeinrichtung 5 übertragen werden. Von dort kann Wärmestrahlung in die Umgebung abstrahlen. Sollte dieser Wärmetransport nicht gewünscht sein, können die Rippen und/oder die Strömungsleitrichtung 5 auch thermisch isoliert sein.

Statt der Rippen können auch andere Abstandhalter wie Bolzen eingesetzt werden. So ist ein Kanal lediglich zwischen einer Oberfläche des Kapselungsgehäuses 1 und der Teilelemente 5a, 5b gebildet. Bei dieser Konstruktion ist eine Querstörung zugelassen.

Um einen kaminartigen Effekt des Kanals 6 zusätzlich zu unterstützen, sind die Enden der Teilelemente 5a, 5b in den Bereichen der Fluideintrittsöffnung 7 und der Fluidaustrittsöffnung 8 leicht nach außen gebogen, so dass Abschnitte von parallel zueinander liegenden Flächen der beiden Teilelemente 5a, 5b die Fluideintrittsöffnung 7 und die Fluidaustrittsöffnung 8 beabstandet von der Oberfläche des Kapselungsgehäuses 1 halten. Dadurch ist eine gute Strömung 10 durch den Kanal 6 hindurch gewährleistet.

Bei einer Verwendung von erfindungsgemäßen Strömungslenkeinrichtungen, beispielsweise an Kapselungsgehäusen eines Kreuzbausteines, also Kapselungsgehäuse die mehrere kreuzartig zueinander ausgerichtete Anschlussflansche aufweisen, wobei die Anschlussflansche an dem Kapselungsgehäuse ineinander übergehen, können ebenfalls entsprechend rinnenförmig ausgebildete Strömungslenkelemente eingesetzt werden. Diese müssen dann jedoch an die jeweilige Oberflächenausformung der Kapselungsgehäuse angepasst werden, so dass zwischen den Strömungslenkeinrichtungen und den entsprechenden Oberflächen der Kapselungsgehäuse annähernd parallel ausgerichtete Flächen entstehen, zwischen denen jeweils ein Kanal gebildet ist, durch welchen ein Fluid strömen kann.

## Patentansprüche

1. Elektroenergieübertragungsanordnung mit einem Kapselungsgehäuse (1) das eine im wesentlichen rohrförmigen struktur aufweist, die koaxial zu einen Rotationsachse (2) ausgeformt ist, und einem im Innern des Kapselungsgehäuses (1) angeordneten Aktivelement (4), wobei
eine Strömungslenkeinrichtung (5) einen Fluidstrom auf einen äußeren Abschnitt des Kapselungsgehäuses (1) lenkt und zwischen der Strömungslenkeinrichtung (5)und dem äußeren Abschnitt zumindest ein Kanal (6) mit einer Fluideintrittsöffnung (7) und einer Fluidaustrittsöffnung (8) geformt ist, **dadurch gekennzeichnet, dass** das Kapselungsgehäuse (1) einen Abschnitt mit einer annähernd walzenförmigen Außenkontur aufweist und der Kanal (6) im Bereich der walzenförmigen Außenkontur zumindest teilweise durch eine Strömungslenkeinrichtung (5a, 5b) begrenzt ist, die ein erstes und ein zweites rinnenförmiges Teilelement (5a, 5b) aufweist, die sich unter Einhaltung eines Abstandes an einem äußeren Abschnitt des Kapselungsgehäuses (1) anschmiegen und deren Enden in den Bereichen der Fluideintrittsöffnung (7) und der Fluidaustrittsöffnung (8) leicht nach außen gebogen sind, so dass Abschnitte von parallel zueinander liegenden Flächen der beiden Teilelemente (5a, 5b) die Fluideintrittsöffnung (7) und die Fluidaustrittsöffnung (8) beabstandet von der Oberfläche des Kapselungsgehäuses halten und so daß Bereiche des Kands (6) koaxial zu der Rotationsachse (2) ausgerichtet sind.

2. Elektroenergieübertragungsanordnung nach Anspruch 1, **dadurch gekennzeichnet, dass** die Strömungslenkeinrichtung (5) das Kapselungsgehäuse (1) zumindest teilweise abschattet.

3. Elektroenergieübertragungsanordnung nach einem der Ansprüche 1 oder 2,
**dadurch gekennzeichnet, dass** die Strömungslenkeinrichtung (5) zumindest teilweise an dem Kapselungsgehäuse (1) abgestützt ist.

4. Elektroenergieübertragungsanordnung nach einem der Ansprüche 1 bis 3,
**dadurch gekennzeichnet, dass** die Fluideintrittsöffnung (7) einen größeren Querschnitt aufweist als die Fluidaustrittsöffnung (8).

5. Elektroenergieübertragungsanordnung nach einem der Ansprüche 1 bis 4,
**dadurch gekennzeichnet, dass** sich der Querschnitt des Kanals (6) in Strömungsrichtung reduziert.

6. Elektroenergieübertragungsanordnung nach einem der Ansprüche 1 bis 5,
**dadurch gekennzeichnet, dass** der Kanal (6) mehrere parallel wirkende Teilkanäle aufweist.

7. Elektroenergieübertragungsanordnung nach einem der Ansprüche 1 bis 6,
**dadurch gekennzeichnet, dass** bezüglich einer Lotrechten die Fluidaustrittsöffnung (8) oberhalb und die Fluideintrittsöffnung (7)unterhalb des Kapselungsgehäuses (1) angeordnet sind.

8. Elektroenergieübertragungsanordnung nach einem der Ansprüche 1 bis 7,
**dadurch gekennzeichnet, dass** die Elektroenergieübertragungsanordnung ein elektrisches Schaltgerät aufweist.

## Claims

1. Electrical power transmission arrangement having an encapsulating housing (1), which has an essentially tubular structure, which is formed coaxially with respect to a rotation axis (2), and having an active element (4) which is arranged in the interior of the encapsulating housing (1), a flow guidance device (5) guiding a fluid flow to an outer section of the encapsulating housing (1), and at least one channel (6) with a fluid inlet opening (7) and a fluid outlet opening (8) is formed between the flow guidance device (5) and the outer section, **characterized in that**, the encapsulating housing (1) has a section with an external contour approximately in the form of a roller and, in the area of the external contour in the form of a roller, the channel (6) is at least partially bounded by a flow guidance device (5a, 5b), which has a first and a second partial element (5a, 5b) in the form of grooves, which merge on an outer section of the encapsulating housing (1), while maintaining a separation, and whose ends are curved slightly outwards in the areas of the fluid inlet opening (7) and of the fluid outlet opening (8) such that sections of surfaces, which are parallel to one another, of the two partial elements (5a, 5b) keep the fluid inlet opening (7) and the fluid outlet opening (8) at a distance from the surface of the encapsulating housing, and such that areas of the channel (6) are aligned coaxially with respect to the rotation axis (2).

2. Electrical power transmission arrangement according to Claim 1,
**characterized in that**
the flow guidance device (5) at least partially shadows the encapsulating housing (1).

3. Electrical power transmission arrangement according to one of Claims 1 or 2,
**characterized in that**
the flow guidance device (5) is at least partially supported on the encapsulating housing (1).

4. Electrical power transmission arrangement according to one of Claims 1 to 3,
**characterized in that**
the fluid inlet opening (7) has a larger cross section than the fluid outlet opening (8).

5. Electrical power transmission arrangement according to one of Claims 1 to 4,
**characterized in that**
the cross section of the channel (6) decreases in the flow direction.

6. Electrical power transmission arrangement according to one of Claims 1 to 5,
**characterized in that**
the channel (6) has a plurality of parallel-acting partial channels.

7. Electrical power transmission arrangement according to one of Claims 1 to 6,
**characterized in that**,
with respect to a vertical, the fluid outlet opening (8) is arranged above the encapsulating housing (1), and the fluid inlet opening (7) is arranged below the encapsulating housing (1).

8. Electrical power transmission arrangement according to one of Claims 1 to 7,
**characterized in that**
the electrical power transmission arrangement has an electrical switching device.

## Revendications

1. Dispositif de transmission d'énergie électrique, comprenant un boîtier ( 1 ) d'encapsulage, de structure sensiblement tubulaire, qui est formé coaxialement à un axe ( 2 ) de révolution, et un élément ( 4 ) actif disposé à l'intérieur du boîtier ( 1 ) d'encapsulage, dans lequel un dispositif ( 5 ) de déviation du courant dévie un courant de fluide sur un segment extérieur du boîtier ( 1) d'encapsulage et au moins un canal ( 6 ) ayant une ouverture ( 7 ) d'entrée du fluide et une ouverture ( 8 ) de sortie du fluide est formé entre le dispositif ( 5 ) de déviation du courant et le segment extérieur,
**caractérisé en ce que**
le boîtier ( 1 ) d'encapsulage comporte un segment ayant un contour extérieur à peu près en forme de cylindre et le canal ( 6 ) est délimité dans la zone du contour extérieur en forme de cylindre, au moins en partie, par un dispositif ( 5a, 5b ) de déviation du courant, qui a un premier et un deuxième élément ( 5a, 5b ) partiels en forme de rigole, qui s'adaptent avec maintien d'une distance à un segment extérieur du boîtier ( 1 ) d'encapsulage et dont les extrémités sont courbées légèrement vers l'extérieur dans les zones de l'ouverture ( 7 ) d'entrée du fluide et l'ouverture ( 8 ) de sortie du fluide, de manière à ce que des segments de surfaces parallèles les unes aux autres des deux éléments ( 5a, 5b ) partiels maintiennent l'ouverture ( 7 ) d'entrée du fluide et l'ouverture ( 8 ) de sortie du fluide à distance de la surface du boîtier d'encapsulage et de manière à ce que des parties du canal ( 6) soient dirigées coaxialement à l'axe ( 2 ) de révolution.

2. Dispositif de transmission d'énergie électrique suivant la revendication 1,
**caractérisé en ce que**
le dispositif ( 5 ) de déviation du courant protège le boîtier ( 1 ) d'encapsulage au moins en partie.

3. Dispositif de transmission d'énergie électrique suivant l'une des revendications 1 ou 2,
**caractérisé en ce que**
le dispositif ( 5 ) de déviation du courant s'appuie au moins en partie sur le boîtier ( 1 ) d'encapsulage.

4. Dispositif de transmission d'énergie électrique suivant l'une des revendications 1 à 3,
**caractérisé en ce que**
l'ouverture ( 7 ) d'entrée de fluide a une section transversale plus grande que l'ouverture ( 8 ) de sortie du fluide.

5. Dispositif de transmission d'énergie électrique suivant l'une des revendications 1 à 4,
**caractérisé en ce que**
la section transversale du canal ( 6 ) est réduite dans le sens du courant.

6. Dispositif de transmission d'énergie électrique suivant l'une des revendications 1 à 5,
**caractérisé en ce que**
le canal ( 6 ) a plusieurs canaux partiels agissant en parallèle.

7. Dispositif de transmission d'énergie électrique suivant l'une des revendications 1 à 6,
**caractérisé en ce que**
par rapport à une verticale, l'ouverture ( 8 ) de sortie du fluide est disposée au-dessus et l'ouverture ( 7 ) d'entrée du fluide est disposée en dessous du boîtier ( 1 ) d'encapsulage.

8. Dispositif de transmission d'énergie électrique suivant l'une des revendications 1 à 7,
**caractérisé en ce que**
le dispositif de transmission d'énergie électrique est un appareil électrique de commutation.
